# EUROPÄISCHE PATENTANMELDUNG

(11) **EP 1 422 394 A1**
(43) Veröffentlichungstag der Anmeldung: **26.05.2004**
(21) Anmeldenummer: 03026796.7
(22) Anmeldetag: 22.11.2003
(51) Int. Cl.: F01N 3/20, F01N 3/08, F01N 3/22, F01N 3/32

(54) **Abgasreinigungsanlage einer Brennkraftmaschine mit einer Kühleinheit sowie Verfahren zum Betrieb einer Abgasreinigungsanlage**

(30) Priorität: 23.11.2002 DE 10254727
(71) Anmelder: ADAM OPEL AG, 65423 Rüsselsheim (DE)
(72) Erfinder: Hubig, Stefan, 66646 Urexweiler (DE); Oswald, Helmut, 55234 Albig (DE)

(57) **Zusammenfassung**

Eine Abgasreinigungsanlage einer Brennkraftmaschine mit einem Katalysator, mindestens einem Stickoxidspeicher und einer Abgaskühleinheit zur Regelung der Temperatur des den Stickoxidspeicher durchströmenden Abgasstroms ermöglicht einen optimierten Betrieb der Abgasreinigungsanlage und eine kraftstoffsparende Betriebsweise der Brennkraftmaschine wenn die Abgaskühleinheit eine Vorrichtung zum Einblasen zusätzlicher Luft ist.

## Beschreibung

Die Erfindung betrifft eine Abgasreinigungsanlage einer Brennkraftmaschine mit einem Katalysator, mindestens einem Stickoxidspeicher und einer Abgaskühleinheit zur Regelung der Temperatur des den Stickoxidspeicher durchströmenden Abgasstroms sowie ein Verfahren zum Betrieb der Abgasreinigungsanlage unter Regelung der Temperatur. Die Erfindung betrifft insbesondere Abgasreinigungsanlagen, die für einen Betrieb mit einem Verbrennungsmotor geeignet sind, welcher mit mageren Luft-/Kraftstoffgemisch betrieben wird.

Bei Magerbetrieb ist ein konventioneller Dreiwegekatalysator nicht zur effektiven Stickoxidreduktion geeignet. Daher werden in Abgasreinigungsanlagen für vorwiegend mager betriebene Verbrennungsmotoren bevorzugt Stickoxidspeicher, auch Stickoxid- Speicherkatalysatoren genannt, eingesetzt, die im Magerbetrieb der Verbrennungseinrichtung emittierte Stickoxide meist durch Adsorption in Nitratform zwischenspeichern. Von Zeit zu Zeit werden kurzzeitige Desorptions- oder Regenerationsphasen mit fettem Betrieb der Verbrennungseinrichtung durchgeführt, um die in Nitratform zwischengespeicherten Stickoxide aus dem Stickoxidspeicher zu desorbieren und mit den vorhandenen Reduktionsmitteln, wie unverbrannte Kohlenwasserstoffe und Kohlenmonoxid, umzusetzen.

Der Einsatz einer Katalysatoranordnung mit einem konventionellen Dreiwegekatalysator und einem Stickoxidspeicher (NOₓ-Trap) erfolgt demnach bevorzugt bei Kraftfahrzeugen, deren Verbrennungsmotor für einen kraftstoffsparenden Magerbetrieb ausgelegt ist, d.h. bei λ > 1 betrieben wird. Im Dreiwege-Katalysator findet auch im Magerbetrieb die Oxidation unverbrannter Kohlenwasserstoffe und Kohlenmonoxid zu Wasser und kohlendioxid statt. Die Stickoxidfalle verringert insbesondere im Magerbetrieb auftretende Stickoxidemissionen, indem Stickoxidmoleküle über einen Zeitraum von ca. 10 bis 200 Sekunden an der Beschichtung der Falle angelagert und somit aus dem Abgas entfernt werden. Hat die Aufnahmekapazität der Stickoxidfalle einen bestimmten % Anteile der maximal möglichen Aufnahmekapazität erreicht, wird die Stickoxidfalle durch Umschalten des Motors auf fettes Gemisch (λ = 0,8) für ca. 1-10 Sekunden regeneriert, wobei die durch das fette Gemisch entstehenden hohen Kohlenwasserstoffund Kohlendioxid-Emissionen die im Speicher in Form von Nitraten gebundenen Stickoxide über mehrere Zwischenreaktionen im Idealfall in Stickstoff umsetzen.

Der Speicherprozeß der Stickoxidspeicher funktioniert jedoch nur in einem relativ engen Temperaturbereich von 200 K, dessen Lage vom Material des Stickoxidspeichers abhängig ist. Bei einem Barium-Speicher liegt der Funktionsbereich etwa bei 200 bis 400°C,, bei einem Kalium-Speicher etwa bei 300 bis 500°C.

Um nach einem Kaltstart möglichst schnell die Arbeitstemperatur zu erreichen, ist ein niedriger Funktionsbereich des Stickoxidspeichers vorteilhaft. Entsprechend kühlt der Speicher dann auch in längeren Leerlaufphasen nicht unter die Arbeitstemperatur aus. Diese Auslegung führt jedoch bei höherer Belastung des Motors und damit höheren Abgastemperaturen zum Überschreiten der oberen Einspeichertemperatur. In der Folge muß vom verbrauchsgünstigen Magerbetrieb auf λ = 1 umgeschaltet werden, damit die Stickoxidkonvertierung dann im Dreiwege-Katalysator erfolgen kann. Eine motorferne Anordnung des Speichers, ein vorgeschalteter Abgaskühler und/oder der Einsatz von Kalium-Speichern führen zu einem späten Erreichen der Funktionstemperatur des Speichers nach dem Start und eventuellem Auskühlen unter die Funktionstemperatur bei Niedriglast. Durch Maßnahmen zur Erreichung der Funktionstemperatur des Speichers wie späte Zündung, eine verzögerte Aktivierung des Magerbetriebes oder auch eine Sperrung des Magerbetriebes bei Unterschreiten der Funktionstemperatur wird der Kraftstoffverbrauch erhöht.

Als ein weiteres Problem ist die bei λ = 1 gegenüber Magerbetrieb mit ca. λ = 2 um ca. 100 K höhere Abgastemperatur zu nennen. Wenn nach fahrt mit hoher Last der Magerbetrieb gesperrt ist, da der Funktionsbereich des Speichers nach oben verlassen wurde, sinkt auch bei anschließender langsamer Fahrt die Temperatur des Speichers kaum noch ab. Entsprechend sind aus abgastechnischen Gründen die motorischen Verbrauchspotentiale des Magerbetriebs nicht vollständig auf den realen Fahrbetrieb umsetzbar.

Ein weiteres Problem ist, dass sich der Schwefelgehalt des Kraftstoffes bei Magerbetrieb im Stickoxidspeicher anlagert und dessen Wirksamkeit reversibel vermindert. Je nach Schwefelgehalt des Kraftstoffes und Systemalterung werden nach Magerbetrieb über wenige Hundert Kilometer bis hin zu 10.000-km-Intervallen Entschwefelungen notwendig. Hierzu muß ein Barium-Speicher bei mehr als 700°C für etwa 20 Minuten mit fettem Gemisch betrieben werden, ein Kalium-Speicher mit mehr als 800°C. Um die Entschwefelung auch bei zurückhaltender Fahrweise sicherzustellen, ist eine motornahe Anordnung des Stickoxidspeichers vorteilhaft.

Andererseits liegt die maximale Temperatur, oberhalb der die Stickoxidspeicher irreversibel beschädigt werden, bei einem Barium-Speicher bei 750°C, bei einem Kalium-Speicher bei 850°C. Entsprechend erfordert ein Barium-Speicher im Vergleich zu einem Kalium-Speicher bei gleicher Position zum Schutz vor irreversibler Alterung ein um 5 bis 10 % fetteres Vollastgemisch.

Zusammenfassend sollte abhängig vom Betriebszustand der Brennkraftmaschine bei erhöhten Abgastemperaturen wegen der dann verschlechterten Speichereffektivität des Stickoxidspeichers zu stöchiometrischem Betrieb gewechselt werden, was allerdings zu einem gegenüber Magerbetrieb erhöhten Kraftstoffverbrauch führt. Temperaturen über ca. 800°C können zu irreversiblen Schädigungen des Stickoxidspeichers führen und sollten daher durch geeignete Maßnahmen vermieden werden.

Wie vorstehend dargelegt, ist die Temperätur eine wichtige Einflußgröße auf die Effizienz der Katalysatoranordnung. Da die Abgastemperatur am Verbrennungsmotor in einem Bereich von etwa 200 bis 1000°C variiert, sind verschiedene Lösungsansätze bekannt, die Temperatur des in den Katalysator strömenden Abgases zu beeinflussen.

So ist beispielsweise bekannt, beim Wechsel von Adsorptionsbetrieb zu Desorptionsbetrieb von der während des Adsorptionsbetriebs meist herrschenden mageren Abgasatmosphäre zu einer fetten, chemisch reduzierend wirkenden Abgasatmosphäre überzugehen, d. h. das Abgasluftverhältnis von einem zuvor über dem stöchiometrischen Wert eins liegenden Wert auf einen unterhalb des stöchiometrischen Wertes liegenden Wert rasch zu ändern. Da das Luftverhältnis auch als Lambdawert bezeichnet wird, wird dieser rasche Wechsel der Abgasatmosphäre von mager auf fett allgemein auch "Lambdasprung" genannt. Desorptionsverfahren dieser Art mit einem Lambdasprung und das daraus resultierende Abgasemissionsverhalten des Stickoxidadsorbers sowie eines die Abgase erzeugenden KraftfahrzeugVerbrennungsmotors werden beispielsweise in den Offenlegungsschriften **EP 0 598 917 A1** und **EP 0 636 770 A1** offenbart. Dabei soll für die Desorption auf einen Fettwert des Abgasluftverhältnisses gewechselt werden, der ebenso wie die Steilheit des zugehörigen Lambdasprunges von der Temperatur des Abgases und damit des Stickoxidspeichers festgelegt wird.

Bei dieser Art der Desorption des Stickoxidspeichers kommt es zu Beginn der Desorptionsbetriebsphase zu sogenannten Stickoxid-Durchbrüchen, wenn der Desorptions-betrieb nicht rechtzeitig mit ausreichend viel Reduktionsmittel gestartet wird. Zudem kann es gegen Ende der Desorption zu einem unerwünschten Reduktionsmittel-Schlupf kommen, der eine unerwünschte Emission von Reduktionsmitteln mit dem Abgas darstellt, wenn der Desorptionsbetrieb nicht rechtzeitig beendet wird. Der Reduktionsmittelschlupf beeinflußt sowohl den Kraftstoffverbrauch für die Verbrennungsquelle als auch die Schadstoffemissionen negativ.

Ein weiterer Lösungsansatz, die Temperatur des in den Katalysator strömenden Abgases zu beeinflussen, besteht darin, mittels in Strömungsrichtung vor der Katalysatoranordnung angeordneter und durch ein Stellglied absperrbarer Kühlschleifen in den Abgasleitungen die Abgastemperatur zu senken. Eine Abgasreinigungsanlage mit einer solchen schaltbaren Abgaskühleinheit wird beispielsweise in den Offenlegungsschriften **DE 195 22 165 A1, EP 0 856 645 A1** und **DE 100 43 621 A1** offenbart. An der sogenannten Bypassleitung können zusätzlich noch Kühler angebracht werden, die die Abgastemperatur weiter verringern. Die **DE 197 03 295 A1** offenbart ein Regelungsverfahren für solche Anordnungen.

Nachteilig an dieser Variante sind die hohen Kosten für die Anlage sowie Probleme mit der Unterbringung der zusätzlichen Komponenten am Kraftfahrzeug.

Alternativ kann zur Kühlung eines motornahen Stickoxidspeichers eine auf starke Abgaskühlung durch Fahrtwind optimierte Abgasreinigungsanlage genutzt werden. Eine solche Anlage benötigt eventuell eine zusätzliche Vorrichtung zur elektrischen Beheizung der Katalysatoranordnung.

Aus der **EP 0 540 280 A1** ist ein Verfahren zur Steuerung der Regeneration einer Stickoxidfalle im Abgassystem eines Magergemisch- Verbrennungsmotors bekannt, bei dem die Temperatur der Stickoxidfalle über eine elektrische Heizvorrichtung zum Zwecke der Regeneration erhöht wird. Bei der dort beschriebenen Anordnung sind der Stickoxidspeicher und der Dreiwegekatalysator im Abgasweg relativ weit vom Verbrennungsmotor entfernt angeordnet. Durch die auf dem Weg auftretenden Abgaswärmeverluste ist die Gefahr einer Überhitzung der Komponenten nicht gegeben. Diese Anordnung hat jedoch gegenüber einer nahe am Motorblock angeordneten Katalysatoranordnung den Nachteil, dass das Anspringverhalten deutlich verschlechtert ist. Deshalb ist gemäß der EP 0 540 280 A1 ein zusätzlicher Startkatalysator vorgesehen, der bis zum Anspringen des Hauptkatalysators die Abgasreinigung übernimmt. Außerdem ist bei dieser Abgasbehandlungsanordnung ein zusätzliches elektrisches Heizelement erforderlich, um die Stickoxidfalle zu regenerieren. Eine Regelung der Temperatur der Stickoxidfalle findet während des Normalbetriebs, d. h. während der Zeiten, in denen die Stickoxidfalle Stickoxide absorbiert, nicht statt. Die Stickoxidfalle wird lediglich zum Zwecke der Regeneration für eine vorbestimmte Zeitspanne beheizt. Auch sind im Normalbetrieb keine Maßnahmen vorgesehen, die Stickoxidfallen-Temperatur ausreichend hoch zu halten, um deren optimalen Wirkungsgrad zu erhalten.

Der vorliegenden Erfindung lag die Aufgabe zugrunde, eine Abgasreinigungsanlage einer Brennkraftmaschine mit einem Katalysator, mindestens einem Stickoxidspeicher und einer Abgaskühleinheit zur Regelung der Temperatur des den Stickoxidspeicher durchströmenden Abgasstroms sowie das Verfahren zum Betrieb der Abgasreinigungsanlage unter Regelung der Temperatur bereitzustellen, bei denen die vorstehend genannten Nachteile vermieden werden. Dabei sollten Kosten sowie Platz für zusätzliche Bauteile möglichst gering gehalten und der Kraftstoffverbrauch minimiert werden.

Es wurde nun gefunden, dass die Einblasung zusätzlicher Luft in die Abgasreinigungsanlage einen optimierten Betrieb der Abgasreinigungsanlage und'eine kraftstoffsparende Betriebsweise der Brennkraftmaschine ermöglicht.

Gegenstand der vorliegenden Erfindung ist in einer ersten Ausführungsform eine Abgasreinigungsanlage einer Brennkraftmaschine mit einem Katalysator, mindestens einem Stickoxidspeicher und einer Abgaskühleinheit zur Regelung der Temperatur des den Stickoxidspeicher durchströmenden Abgasstroms, bei der die Abgaskühleinheit eine Vorrichtung zum Einblasen zusätzlicher Luft ist.

Die erfindungsgemäße Abgasreinigungsanlage ist konstruktiv einfach, da sie keine Bypassleitung und keine Abgasklappe sowie keinen zusätzlichen Kühler erfordert. Prinzipiell können sogar bestehende Anlagen durch eine kostengünstige Nachrüstung optimiert werden.

Die Vorrichtung zum Einblasen zusätzlicher Luft in die Abgasreinigungsanlage kann unterschiedlich realisiert werden. So ist es beispielsweise möglich, einen Überdruck-Luftspeicher vorzusehen, der über ein elektrisch schaltendes Ventil mit der Abgasreinigungsanlage verbunden ist. Das Ventil kann dann kenndatenabhängig gesteuert werden und gibt bei Öffnung die unter Druck stehende Luft in das Abgasreinigungssystem frei. Diese Ausführungsform ist insbesondere für Kraftfahrzeuge geeignet, die bereits über einen Druckluftspeicher verfügen,, beispielsweise Lkw mit Druckluft-unterstützter Bremse oder Reifenfüllanlagen.

Universeller einsetzbar und kostengünstiger ist eine Pumpe, Abgasturbolader, Mechanischer-Lader, Sekundärluft-Lader, die Umgebungsluft ansaugen und in die Abgasreinigungsanlage einblasen. Mit besonderem Vorteil werden hier elektrisch angetrieben Pumpen eingesetzt, so dass bevorzugte erfindungsgemäße Abgasreinigungsanlagen dadurch gekennzeichnet sind, dass die Abgaskühleinheit eine elektrisch angetriebene Luftpumpe umfaßt.

Die Zuführung der zusätzlichen Luft in die Abgasreinigungsanlage kann grundsätzlich an jeder Stelle zwischen Zylinderauslaß und dem Stickoxidspeicher liegen. In erfindungsgemäß bevorzugten Abgasreinigungsanlagen ist die Abgaskühleinheit zwischen dem Katalysator und dem Stickoxidspeicher angeordnet.

Durch diese erfindungsgemäß bevorzugte Anordnung ergibt sich eine sehr wirkungsvolle Möglichkeit zum zyklischen Aufheizen des Stickoxidspeichers: Wenn der Fettbetrieb des Motors nach der Stickoxid-Regeneration aufrecht erhalten wird, liegen infolge des Luftmangels im Abgas nach dem Dreiwege-Katalysator noch erhöhte Konzentrationen an unverbrannten Kohlenwasserstoffen und Kohlenmonoxid vor. Durch Aktivierung der erfindungsgemäßen Abgaskühleinheit, d.h. durch Einblasen von Luft, findet im Stickoxidspeicher eine exotherme Reaktion statt, die den Speicher aufheizt. Entsprechend läßt sich auch bei einer motorfernen Anordnung des Stickoxidspeichers z. B. auch ein Kalium-Speicher im Niedriglastbereich auf Arbeitstemperatur halten. Solange die Anfettung durch die Zusatzluft überkompensiert wird, d. h. das Gesamtgemisch einen λ-Wert ≥ 1 aufweist, entstehen bei der Aufheizung keine erhöhten Emissionen.

Die erfindungsgemäß bevorzugte Anordnung ermöglicht darüber hinaus bei dauerhaft fettem Gemisch durch zyklisches Ein- und Ausschalten der Lufteinblasung eine Desulfatisierung des Stickoxidspeichers (Heizen bei eingeschalteter Lufteinblasung, Entschwefeln bei ausgeschalteter Lufteinblasung).

Die erfindungsgemäße Abgasreinigungsanlage kann mit allen Stickoxidspeichern betrieben werden. Wegen des höheren Funktionsbereiches ist der Einsatz eines Stickoxidspeichers, beispielsweise Kaliumspeichers und/oder Bariumspeichers, besonders bevorzugt, so dass erfindungsgemäße Abgasreinigungsanlagen, einen der Stickoxidspeicher aufweisen.

Durch die erfindungsgemäße Abgasreinigungsanlage ist es möglich, den Magerbetrieb der Brennkraftmaschine über den normalen Temperaturbereich des Stickoxidspeichers hinaus auszudehnen. Dadurch lässt sich der Kraftstoffverbrauch optimieren. Durch die Verwendung eines Kalium-Speichers in einer motorfernen Position ergibt sich bei scharfer Fahrweise ein Verbrauchsvorteil infolge des geringeren Anfettungsbedarfs zum Temperaturschutz. Durch die Lufteinblasung vor dem Stickoxidspeicher läßt sich dieser verbrauchsgünstig auf der Betriebstemperatur halten und in einem sehr großen Lastbereich zuverlässig entschwefeln.

Ein weiterer Gegenstand der vorliegenden Erfindung ist ein Verfahren zum Betrieb einer Abgasreinigungsanlage, um die erfindungsgemäßen Vorteile zu erzielen. Dieses erfindungsgemäße Verfahren zum Betrieb einer Abgasreinigungsanlage mit Stickoxidspeicher und einer Einrichtung zur Veränderung der Abgastemperatur zur Reinigung eines stickoxidhaltigen Abgases einer Brennkraftmaschine ist dadurch gekennzeichnet, dass die Einrichtung zur Veränderung der Abgastemperatur dem Abgas zusätzliche Luft zuführt.

Wie bereits vorstehend beschrieben, kann die Zuführung der zusätzlichen Luft in die Abgasreinigungsanlage grundsätzlich an jeder Stelle zwischen Zylinderauslaß und dem Stickoxidspeicher liegen. Durch das Einblasen zusätzlicher Luft bei hohen Abgastemperaturen wird zuverlässig vermieden, dass die obere Funktionstemperaturgrenze des Stickoxidspeichers überschritten wird. Damit kann der verbrauchsgünstige Magerbetrieb der Brennkraftmaschine länger aufrecht erhalten werden. Im Magerbetrieb kann so der Stickoxidspeicher effektiv gekühlt werden. Andererseits kann das erfindungsgemäße Verfahren auch dazu genutzt werden, den Stickoxidspeicher bei Beginn des Betriebs der Brennkraftmaschine aufzuheizen, indem eine Kombination aus fettem Betrieb der Brennkraftmaschine (und damit unverbrannten Kohlenwasserstoffen im Abgas) und Lufteinblasung für eine exotherme Reaktion im Stickoxidspeicher sorgt. Hierzu ist es bevorzugt, die Luft direkt vor dem Stickoxidspeicher einzublasen.

In erfindungsgemäß bevorzugten Verfahren wird die zusätzliche Luft der Abgasreinigungsanlage daher zwischen dem Katalysator und dem Stickoxidspeicher zugeführt.

Durch diese Verfahrensweise lässt sich - wie oben bereits beschrieben - der Stickoxidspeicher sehr wirkungsvoll zyklisch Aufheizen und damit auch'bei einer motorfernen Anordnung des Stickoxidspeichers z. B. auch ein Kalium-Speicher im Niedriglastbereich auf Arbeitstemperatur halten.

Die Vorteile der erfindungsgemäßen Verfahrensweise kommen insbesondere bei mager laufenden Benzinmotoren zum Tragen, da hier die Schadstoffemission und der Kraftstoffverbrauch gesenkt werden. Es ist erfindungsgemäß vorteilhaft, die Brennkraftmaschine bei Luftüberschuß, d. h. bei λ > 1, zu betreiben. Hierbei können durchaus Werte von λ ≥ 2 eingestellt werden, besonders bevorzugt sind Werte von 1,1 ≤ λ ≤ 3.

Erfindungsgemäße Verfahren, bei denen die zusätzliche Luft bei einem Betrieb der Brennkraftmaschine mit Luftüberschuß, d. h. bei λ > 1, zugeführt wird, sind bevorzugt.

Wie bereits einleitend erwähnt, werden Stickoxidspeicher durch im Abgas enthaltenen Schwefel, der meist aus der Verwendung schwefelhaltiger Kraftstoffe stammt, im Sinne einer reduzierten Stickoxidspeicherfähigkeit geschädigt, indem es im Magerbetrieb neben der Nitrateinlagerung zur Einlagerung von Schwefel speziell in Sulfatform kommt. Die eingelagerten Sulfate werden unter den Bedingungen üblicher Stickoxid-Desorptionsphasen nicht freigesetzt bzw. zersetzt, so dass sie zunehmend die Stickoxidspeicherfähigkeit des Stickoxidspeichers herabsetzen.

Deswegen müssen von Zeit zu Zeit Desulfatisierungsphasen durchgeführt werden, in welchen der Stickoxidspeicher geeigneten Desulfatisierungsbedingungen unterworfen wird, durch die der eingelagerte Schwefel wieder freigesetzt werden kann, d. h. durch die die Sulfate reduziert werden. Diese Desulfatisierungsbedingungen beinhalten typischerweise die Einstellung einer fetten Abgaszusammensetzung und einer erhöhten Stickoxidspeichertemperatur von über 600°C, bevorzugt über 650°C, für eine ausreichende Desulfatisierungsdauer, die länger als typische Stickoxiddesorptionsperioden dauern. Der Desulfatisierungsvorgang ist wegen des erforderlichen fetten Luftverhältnisses und eventuell notwendiger Maßnahmen zur Aufheizung des Stickoxidspeichers mit einem entsprechenden Kraftstoffmehrverbrauch verbunden. Zudem ist während der Einstellung des fetten Luftverhältnisses eine Wirkung des Dreiwegekatalysators, bezüglich der Kohlenwasserstoffkonvertierung (HC) und CO-Umsatz nur ist sehr geringem Maß möglich, da dessen optimaler Arbeitspunkt bei stöchiometrischem Luftverhältnis, d. h. λ=1, liegt.

Während bei üblichen Verfahren zur Abgasreinigung nach einer Desulfatisierungsphase mit Aufheizung des Stickoxidspeichers dessen Abkühlung bei Wechsel zu einem Betriebszustand mit niedrigerer Motorlast länger dauert, so dass erst später wieder auf kraftstoffsparenden Magerbetrieb gewechselt werden kann, ermöglicht die erfindungsgemäße Verfahrenswiese durch das Einblasen zusätzlicher Luft die Kühlung des Stickoxidspeichers und den frühen Wechsel auf den verbrauchsgünstigen Magerbetrieb. Das erfindungsgemäße Verfahren ist damit besonders für den Einsatz schwefelhaltiger Kraftstoffe oder nicht vollständig schwefelfreier Kraftstoffe geeignet, da die Nachteile der erforderlichen Desulfatisierungsphasen deutlich gemildert werden. Mit dem erfindungsgemäßen Verfahren ist daher eine effektive und verbrauchsgünstige Entschwefelung des Stickoxidspeichers möglich.

In bevorzugten erfindungsgemäßen Verfahren ist das Abgas schwefelverunreinigt, und es werden von Zeit zu Zeit Desulfatisierungsphasen zur Freisetzung von im Sickoxidspeicher eingelagertem Schwefel durchgeführt, wobei die Brennkraftmaschine mit fettem Gemisch, d. h. bei λ < 1, betrieben und die Einrichtung zur Veränderung der Abgastemperatur zyklisch ein- und ausgeschaltet wird.

Das erfindungsgemäße Verfahren ist über die herkömmliche Motorelektronik problemlos steuerbar, wobei die Einrichtungen zur Ermittlung der Meß- und Regelwerte sowie die Datenverarbeitung bei Magermotoren, die die Abgasnorm Euro IV erfüllen, bereits vorhanden'sind. So verfügen diese Motoren über ein Luftmassenmeßgerät, eine Breitbandmagersonde im Abgaskrümmer, einen Temperaturfühler vor dem bzw. im Sticköxidspeicher sowie über eine Zweipunkt-Lambdasonde hinter dem Stickoxidspeicher über den Abgasmassenstrom (Luftmassenstrom + Kraftstoffmassenstrom) und Lambda läßt sich die freiwerdende Reaktionsenergie exakt berechnen. Die Temperatur des Stickoxidspeichers kann dann auf Basis der Werte des Temperatursensors modelliert werden, wobei die Lambdasonde hinter dem Stickoxidspeicher zur Einstellung eines stöchiometrischen bzw. mageren Gesamtgemischs genutzt wird.

In bevorzugten erfindungsgemäßen Verfahren wird die Temperatur des Stickoxidspeichers bestimmt und die zusätzliche Luft der Abgasreinigungsanlage in Abhängigkeit vom bestimmten Wert zugeführt.

## Patentansprüche

1. Abgasreinigungsanlage einer Brennkraftmaschine mit einem Katalysator, mindestens einem Stickoxidspeicher und einer Abgaskühleinheit zur Regelung der Temperatur des den Stickoxidspeicher durchströmenden Abgasstroms, **dadurch gekennzeichnet, dass** die Abgaskühleinheit eine Vorrichtung zum Einblasen zusätzlicher Luft ist.

2. Abgasreinigungsanlage nach Anspruch 1, **dadurch gekennzeichnet, dass** die Abgaskühleinheit eine elektrisch angetriebene Luftpumpe umfaßt.

3. Abgasreinigungsanlage nach einem der Ansprüche 1 oder 2, **dadurch gekennzeichnet, dass** die Abgaskühleinheit zwischen dem Katalysator und dem Stickoxidspeicher angeordnet ist.

4. Abgasreinigungsanlage nach einem der Ansprüche 1 bis 3, **dadurch gekennzeichnet, dass** der Stickoxidspeicher ein Kaliumspeicher und/oder Bariumspeicher ist.

5. Verfahren zum Betrieb einer Abgasreinigungsanlage mit Stickoxidspeicher und einer Einrichtung zur Veränderung der Abgastemperatur zur Reinigung eines stickoxidhaltigen Abgases einer Brennkraftmaschine, **dadurch gekennzeichnet, dass** die Einrichtung zur Veränderung der Abgastemperatur dem Abgas zusätzliche Luft zuführt.

6. Verfahren nach Anspruch 5, **dadurch gekennzeichnet, dass** die zusätzliche Luft der Abgasreinigungsanlage zwischen dem Katalysator und dem Stickoxidspeicher zugeführt wird.

7. Verfahren nach einem der Ansprüche 5 oder 6, **dadurch gekennzeichnet, dass** die zusätzliche Luft bei einem Betrieb der Brennkraftmaschine mit Luftüberschuß, d. h. bei λ ≥ 1, zugeführt wird.

8. Verfahren nach einem der Ansprüche 5 bis 7, **dadurch gekennzeichnet, dass** das Abgas schwefelverunreinigt ist und von Zeit zu Zeit Desulfatisierungsphasen zur Freisetzung von im Sickoxidspeicher eingelagertem Schwefel durchgeführt werden, wobei die Brennkraftmaschine mit fettem Gemisch, d. h. bei λ < 1, betrieben und die Einrichtung zur Veränderung der Abgastemperatur zyklisch ein- und ausgeschaltet wird.

9. Verfahren nach einem der Ansprüche 5 bis 8, **dadurch gekennzeichnet, dass** die Temperat'ur des Stickoxidspeichers gemessen oder modelliert wird und die zusätzliche Luft der Abgasreinigungsanlage in Abhängigkeit von der Heizenergie zugeführt wird.
